# EUROPEAN PATENT APPLICATION

(11) **EP 4 592 356 A1**
(43) Date of publication of application: **30.07.2025**
(21) Application number: 23868545.7
(22) Date of filing: 19.09.2023
(51) Int. Cl.: C08L 71/12, C08L 81/06, C08K 3/04

(54) **THERMOPLASTIC RESIN COMPOSITION AND MOLDED ARTICLE FORMED THEREFROM**

(30) Priority: 21.09.2022 KR 20220118990
(71) Applicant: LOTTE CHEMICAL CORPORATION, Seoul 05551 (KR)
(72) Inventor: JIN, Young Sub, Uiwiang-si Gyeonggi-do 16073 (KR); LEE, Jung Hun, Uiwiang-si Gyeonggi-do 16073 (KR); LEE, Bong Jae, Uiwiang-si Gyeonggi-do 16073 (KR)
(74) Representative: Germain Maureau
(86) International application number: PCT/KR2023/014117
(87) International publication number: WO 2024/063493

(57) **Abstract**

A thermoplastic resin composition of the present invention comprises: approximately 100 weight parts thermoplastic resin comprising approximately 60-90 wt% polyaryletherketone resin and approximately 10-40 wt% polyarylethersulfone resin; approximately 1-4 weight parts carbon nanotubes; and approximately 2-7 weight parts graphite, wherein the average size of domains (polyarylether sulfone resin) in a matrix (polyaryletherketone resin) measured at 10,000 and 50,000 times magnification using a scanning electron microscope (SEM) is approximately 0.5 µm or less. The thermoplastic resin composition is strong, has good abrasion resistance, impact resistance, and dissipation of electrostatic discharge, and has excellent balance of said physical properties.

## Description

### [Technical Field]

The present invention relates to a thermoplastic resin composition and a molded article formed of the same. More particularly, the present invention relates to a polyaryletherketone/polyarylethersulfone-based thermoplastic resin composition having good properties in terms of abrasion resistance, dissipation of electrostatic charge, rigidity, impact resistance, and balance therebetween, and a molded article formed of the same.

### [Background Art]

Polyaryletherketone (PAEK) resins, such as polyetheretherketone (PEEK) resins, have been used in office automation equipment and automotive applications due to good heat resistance, chemical resistance, rigidity, and fatigue resistance. However, low impact strength of polyaryletherketone resins has restricted use thereof in applications requiring high impact resistance.

Blending with polyarylethersulfone (PAES) resins has been employed to enhance impact strength of polyaryletherketone (PAEK) resins. However, due to limited compatibility between PAEK and PAES resins, blends of PAEK and PAES resins can suffer deterioration in properties such as rigidity and impact strength and can exhibit significant variation in properties (rigidity, impact strength, and the like) depending on the processing direction of a specimen (machine direction (MD) and transverse direction (TD)), which can restrict application thereof.

In addition, blends of polyaryletherketone and polyarylethersulfone resins are required to have improved abrasion resistance and electrostatic dissipative (ESD) performance to be used as a resin composition for semiconductor processing.

Therefore, there is a need for a thermoplastic resin composition that has good properties in terms of abrasion resistance, dissipation of electrostatic charge, rigidity, impact resistance, and balance therebetween without reduction in compatibility between polyaryletherketone and polyarylethersulfone resins.

The background technique of the present invention is disclosed in Korean Patent Registration No. 10-2163638, Korean Patent Registration No. 10-1944140, and the like.

### [Disclosure]

### [Technical Problem]

It is an object of the present invention to provide a thermoplastic resin composition having good properties in terms of abrasion resistance, dissipation of electrostatic charge, rigidity, impact resistance, and balance therebetween.

It is another object of the present invention to provide a molded article formed of the thermoplastic resin composition described above.

The above and other objects of the present invention will become apparent from the detailed description of the following embodiments.

### [Technical Solution]

1. One aspect of the present invention relates to a thermoplastic resin composition. The thermoplastic resin composition comprises: about 100 parts by weight of a thermoplastic resin comprising about 60 wt% to about 90 wt% of a polyaryletherketone resin and about 10 wt% to about 40 wt% of a polyarylethersulfone resin; about 1 part by weight to about 4 parts by weight of carbon nanotubes; and about 2 parts by weight to about 7 parts by weight of graphite, wherein domains (the polyarylethersulfone resin) in a matrix (the polyaryletherketone resin) have an average size of about 0.5 µm or less, as measured by scanning electron microscopy (SEM) at magnifications of 10,000× and 50,000×.
2. In embodiment 1, the polyaryletherketone resin may comprise a repeat unit represented by Formula 1. 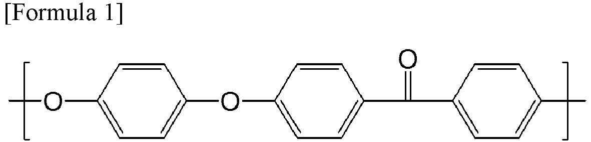
3. In embodiment 1 or 2, the polyaryletherketone resin may have a melt viscosity of about 300 Pa·s to about 500 Pa·s, as measured at a temperature of 400°C and a shear rate of 1,000 sec⁻¹ using a capillary viscometer in accordance with ASTM D3835.
4. In embodiments 1 to 3, the polyarylethersulfone resin may comprise a repeat unit represented by Formula 2 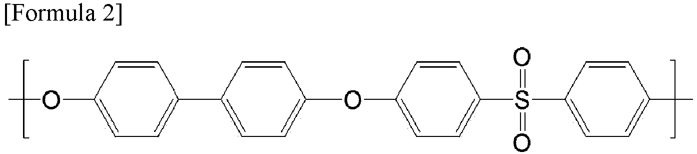
5. In embodiments 1 to 4, the polyarylethersulfone resin may have a melt viscosity of about 200 Pa·s to about 400 Pa·s, as measured at a temperature of 400°C and a shear rate of 1,000 sec⁻¹ using a capillary viscometer in accordance with ASTM D3835.
6. In embodiments 1 to 5, a melt viscosity ratio of the polyaryletherketone resin to the polyarylethersulfone resin may range from about 1:1 to about 4:1.
7. In embodiments 1 to 6, the carbon nanotubes may have an average diameter of about 3 nm to about 15 nm and an average length of about 10 µm to about 25 µm.
8. In embodiments 1 to 7, the graphite may have an average particle size of about 10 µm to about 100 µm and may be flake graphite or expanded flake graphite.
9. In embodiments 1 to 8, the thermoplastic resin composition may have a glass transition temperature of about 150°C to about 170°C and may exhibit a single glass transition temperature.
10. In embodiments 1 to 9, the thermoplastic resin composition may have a weight loss (abrasion loss) of about 33 mg or less, as measured on a specimen having a size of 100 mm×100 mm×3.2 mm after 1,000 cycles of operation under conditions of a load of 1 kgf and an abrasive wheel speed of 60 rpm using an abrasion resistance tester in accordance with ASTM D4060.
11. In embodiments 1 to 10, the thermoplastic resin composition may have a surface resistivity of about 1×10⁶ Q/sq to about 1×10⁹ Q/sq, as measured on a 1 mm thick specimen using a surface resistivity meter in accordance with ASTM D257.
12. In embodiments 1 to 11, the thermoplastic resin composition may have a tensile strength at yield of about 93 MPa to about 100 MPa and a tensile modulus of about 3.3 GPa to about 4.0 GPa, as measured on a 3.2 mm thick injection molded specimen at a crosshead speed of 50 mm/min in the machine direction (MD) of the specimen or at a crosshead speed of 50 mm/min in the transverse direction (TD) of the specimen in accordance with ASTM D638, a difference between tensile strengths at yield of the injection molded specimen in the machine direction and the transverse direction thereof may be less than or equal to about 2 MPa, and a difference between tensile moduli of the injection molded specimen in the machine direction and the transverse direction thereof may be less than or equal to 0.2 GPa.
13. In embodiments 1 to 12, the thermoplastic resin composition may have a flexural strength of about 140 MPa to about 150 MPa and a flexural modulus of about 3.2 GPa to about 4.0 GPa, as measured on a 3.2 mm thick injection molded specimen at a crosshead speed of 2.8 mm/min in the machine direction (MD) of the specimen or at a crosshead speed of 2.8 mm/min in the transverse direction (TD) of the specimen in accordance with ASTM D790, a difference between flexural strengths of the injection molded specimen in the machine direction and the transverse direction thereof may be less than or equal to about 2 MPa, and a difference between flexural moduli of the injection molded specimen in the machine direction and the transverse direction thereof may be less than or equal to about 0.2 GPa.
14. In embodiments 1 to 13, the thermoplastic resin composition may exhibit no breakage in an impact strength test in accordance with ASTM D256, in which unnotched Izod impact strength is measured on a 3.2 mm thick injection molded specimen in the machine direction (MD) or the transverse direction (TD) of the specimen.
15. Another aspect of the present invention relates to a molded article. The molded article is formed of the thermoplastic resin composition according to embodiments 1 to 14.

### [Advantageous Effects]

Embodiments of the present invention provide a thermoplastic resin composition having good properties in terms of abrasion resistance, dissipation of electrostatic charge, rigidity, impact resistance, and balance therebetween, and a molded article formed of the same.

### [Best Mode]

Hereinafter, embodiments of the present invention will be described in detail.

A thermoplastic resin composition according to the present invention comprises: (A) a polyaryletherketone resin; (B) a polyarylethersulfone resin; (C) carbon nanotubes; and (D) graphite.

### (A) Polyaryletherketone resin

The polyaryletherketone resin according to one embodiment of the present invention is used together with the polyarylethersulfone resin, the carbon nanotubes, and the graphite in a specific content ratio to improve properties of the thermoplastic resin composition, such as abrasion resistance, dissipation of electrostatic charge, rigidity, impact resistance, and balance therebetween, without reduction in compatibility between the polyaryletherketone resin and the polyarylethersulfone resin. The polyaryletherketone resin may include a polyaryletherketone resin used in typical thermoplastic resin compositions.

In some embodiments, the polyaryletherketone resin may include a polyaryletherketone resin (a polyetheretherketone resin and the like) comprising a repeat unit represented by Formula 1.

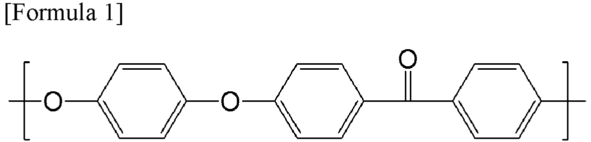

In some embodiments, the polyaryletherketone resin may have a melt viscosity of about 300 Pa·s to about 500 Pa·s, for example, about 310 Pa·s to about 490 Pa·s, as measured at a temperature of 400°C and a shear rate of 1,000 sec⁻¹ using a capillary rheometer in accordance with ASTM D3835. Within this range, the thermoplastic resin composition can have good properties in terms of abrasion resistance, dissipation of electrostatic charge, rigidity, impact resistance, and balance therebetween while securing good compatibility between the polyaryletherketone resin and the polyarylethersulfone resin.

In some embodiments, the polyaryletherketone resin may be present in an amount of 60 wt% to about 90 wt%, for example, about 60 wt% to about 85 wt%, based on the total weight of a thermoplastic resin comprising the polyaryletherketone resin and the polyarylethersulfone resin. If the content of the polyaryletherketone resin is less than about 60 wt% based on the total weight of the thermoplastic resin, the thermoplastic resin composition can have poor properties in terms of compatibility between the polyaryletherketone resin and the polyarylethersulfone resin, dissipation of electrostatic charge, rigidity, and impact resistance and can exhibit significant variation in properties (rigidity, impact resistance, and the like) depending on the processing direction of a specimen (machine direction (MD) and transverse direction (TD)). If the content of the polyaryletherketone resin exceeds about 90 wt% based on the total weight of the thermoplastic resin, the thermoplastic resin composition can have poor properties in terms of compatibility between the polyaryletherketone resin and the polyarylethersulfone resin, rigidity, and impact resistance and can exhibit significant variation in properties (rigidity, impact resistance, and the like) depending on the processing direction of a specimen (machine direction (MD) and transverse direction (TD)).

### (B) Polyarylethersulfone resin

The polyarylethersulfone resin according to one embodiment of the present invention is used together with the polyaryletherketone resin, the carbon nanotubes, and the graphite in a specific content ratio to improve properties of the thermoplastic resin composition, such as abrasion resistance, dissipation of electrostatic charge, rigidity, impact resistance, and balance therebetween, without reduction in compatibility between the polyaryletherketone resin and the polyarylethersulfone resin. The polyarylethersulfone resin may include a polyarylethersulfone resin used in typical thermoplastic resin compositions.

In some embodiments, the polyarylethersulfone resin may include a polyarylethersulfone resin (a polyphenylsulfone resin, etc.) comprising a repeat unit represented by Formula 2.

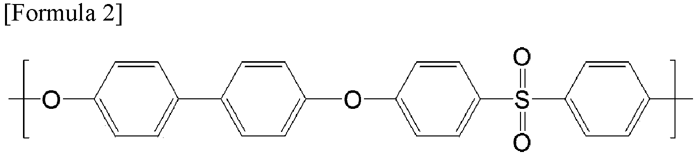

In some embodiments, the polyarylethersulfone resin may have a melt viscosity of about 200 Pa·s to about 400 Pa·s, for example, about 210 Pa·s to about 390 Pa·s, as measured at a temperature of 400°C and a shear rate of 1,000 sec⁻¹ using a capillary rheometer in accordance with ASTM D3835. Within this range, the thermoplastic resin composition can have good properties in terms of abrasion resistance, dissipation of electrostatic charge, rigidity, impact resistance, and balance therebetween while securing good compatibility between the polyaryletherketone resin and the polyarylethersulfone resin.

In some embodiments, a melt viscosity ratio of the polyaryletherketone resin to the polyarylethersulfone resin may range from about 1:1 to about 4:1, for example, about 1.05:1 to about 2.5:1. Within this range, it is possible to ensure good compatibility between the polyaryletherketone resin and the polyarylethersulfone resin, whereby domains (the polyarylethersulfone resin) in a matrix (the polyaryletherketone resin) can have an average size of about 0.5 µm or less and the thermoplastic resin composition can exhibit a single glass transition temperature, can have good properties in terms of abrasion resistance, dissipation of electrostatic charge, rigidity, impact resistance, and the like, and can exhibit minimal variation in physical properties (rigidity, impact resistance, and the like) depending on the processing direction of a specimen (machine direction (MD) and transverse direction (TD)).

In some embodiments, the polyarylethersulfone resin may be present in an amount of about 10 wt% to about 40 wt%, for example, about 15 wt% to about 40 wt%, based on the total weight of the thermoplastic resin comprising the polyaryletherketone resin and the polyarylethersulfone resin. If the content of the polyarylethersulfone resin is less than about 10 wt% based on the total weight of the thermoplastic resin, the thermoplastic resin composition can have poor properties in terms of compatibility between the polyaryletherketone resin and the polyarylethersulfone resin, rigidity, impact resistance, and the like and can exhibit significant variation in properties (rigidity, impact resistance, and the like) depending on the processing direction of a specimen (machine direction (MD) and transverse direction (TD)). If the content of the polyarylethersulfone resin exceeds about 40 wt% based on the total weight of the thermoplastic resin, the thermoplastic resin composition can have poor properties in terms of compatibility between the polyaryletherketone resin and the polyarylethersulfone resin, dissipation of electrostatic charge, rigidity, impact resistance, and the like and can exhibit significant variation in properties (rigidity, impact resistance, and the like) depending on the processing direction of a specimen (machine direction (MD) and transverse direction (TD)).

### (C) Carbon nanotubes

The carbon nanotubes according to one embodiment of the present invention are used together with the polyaryletherketone resin, the polyarylethersulfone resin, and the graphite in a specific content ratio to improve properties of the thermoplastic resin composition, such as abrasion resistance, dissipation of electrostatic charge, rigidity, impact resistance, and balance therebetween, without reduction in compatibility between the polyaryletherketone resin and the polyarylethersulfone resin. For example, the carbon nanotubes may include single-walled carbon nanotubes, double-walled carbon nanotubes, multi-walled carbon nanotubes, bundled carbon nanotubes, and the like.

In some embodiments, the carbon nanotubes may have an average diameter of about 3 nm to about 15 nm, for example, about 5 nm to about 13 nm, as measured by transmission electron microscopy (TEM), and an average length of about 10 µm to about 25 µm, for example, about 12 µm to about 20 µm, as measured by scanning electron microscopy (SEM). Within these ranges, the thermoplastic resin composition can have good properties in terms of compatibility between the polyaryletherketone resin and the polyarylethersulfone resin, abrasion resistance, dissipation of electrostatic charge, and the like and can exhibit minimal variation in properties (rigidity, impact resistance, and the like) depending on the processing direction of a specimen (machine direction (MD) and transverse direction (TD)).

In some embodiments, the carbon nanotubes may be present in an amount of about 1 part by weight to about 4 parts by weight, for example, about 1.5 parts by weight to about 3 parts by weight, relative to about 100 parts by weight of the thermoplastic resin. If the content of the carbon nanotubes is less than about 1 part by weight relative to about 100 parts by weight of the thermoplastic resin, the thermoplastic resin composition can have poor properties in terms of compatibility between the polyaryletherketone resin and the polyarylethersulfone resin, dissipation of electrostatic charge, rigidity, impact resistance and the like and can exhibit significant variation in properties (rigidity, impact resistance, and the like) depending on the processing direction of a specimen (machine direction (MD) and transverse direction (TD)). If the content of the carbon nanotubes exceeds about 4 parts by weight relative to about 100 parts by weight of the thermoplastic resin, the thermoplastic resin composition can have poor properties in terms of dissipation of electrostatic charge and the like.

### (D) Graphite

The graphite according to one embodiment of the present invention is used together with the polyaryletherketone resin, the polyarylethersulfone resin, and the carbon nanotubes in a specific content ratio to improve properties of the thermoplastic resin composition, such as abrasion resistance, dissipation of electrostatic charge, rigidity, impact resistance, and balance therebetween, without reduction in compatibility between the polyaryletherketone resin and the polyarylethersulfone resin. The graphite may include graphite used in typical thermoplastic resin compositions.

In some embodiments, the graphite may have an average particle size of about 10 µm to about 100 µm, for example, about 20 µm to about 90 µm, as measured by scanning electron microscopy (SEM) and may be flake graphite or expanded flake graphite. Within this range, the thermoplastic resin composition can have good properties in terms of compatibility between the polyaryletherketone resin and the polyarylethersulfone resin, abrasion resistance, dissipation of electrostatic charge, and the like and can exhibit minimal variation in physical properties (rigidity, impact resistance, and the like) depending on the processing direction of a specimen (machine direction (MD) and transverse direction (TD)).

In some embodiments, the graphite may be present in an amount of about 2 parts by weight to about 7 parts by weight, for example, about 3 parts by weight to about 6 parts by weight, relative to about 100 parts by weight of the thermoplastic resin. If the content of the graphite is less than about 2 parts by weight relative to about 100 parts by weight of the thermoplastic resin, the thermoplastic resin composition can have poor properties in terms of dissipation of electrostatic charge and the like. If the content of the graphite exceeds about 7 parts by weight relative to about 100 parts by weight of the thermoplastic resin, the thermoplastic resin composition can have poor properties in terms of abrasion resistance, dissipation of electrostatic charge, and the like.

In some embodiments, a weight ratio of the carbon nanotubes to the graphite may range from about 1:1 to about 1:4, for example, about 1:1 to about 1:3. Within this range, the thermoplastic resin composition can have further improved properties in terms of abrasion resistance, dissipation of electrostatic charge, and the like.

The thermoplastic resin composition according to one embodiment of the present invention may further comprise additives used in typical thermoplastic resin compositions. The additives may include, for example, flame retardants, fillers, antioxidants, anti-dripping agents, lubricants, release agents, nucleating agents, heat stabilizers, UV stabilizers, pigments, dyes, and mixtures thereof. The additives may be optionally present in an amount of about 0.001 parts by weight to about 40 parts by weight, for example, about 0.1 parts by weight to about 20 parts by weight, relative to about 100 parts by weight of the thermoplastic resin.

In the thermoplastic resin composition according to the present invention, domains (the polyarylethersulfone resin) in a matrix (the polyaryletherketone resin) may have an average size of 0.5 µm or less (including cases where there are no visible domains), as measured by scanning electron microscopy (SEM) at magnifications of 10,000× and 50,000×. If the average size of the domains exceeds about 0.5 µm, the thermoplastic resin composition can have poor properties in terms of compatibility between the polyaryletherketone resin and the polyarylethersulfone resin, rigidity, impact resistance, and the like and can exhibit significant variation in properties (rigidity, impact resistance, and the like) depending on the processing direction of a specimen (machine direction (MD) and transverse direction (TD)).

In some embodiments, the thermoplastic resin composition may have a glass transition temperature of about 150°C to about 170°C, for example, about 150°C to about 165°C, and may exhibit a single glass transition temperature. Within this range, the thermoplastic resin composition can have good properties in terms of rigidity, impact resistance, and the like without reduction in compatibility between the polyaryletherketone resin and the polyarylethersulfone resin and can exhibit minimal variation in physical properties (rigidity, impact resistance, and the like) depending on the processing direction of a specimen (machine direction (MD) and transverse direction (TD). Here, "single glass transition temperature" means that only one peak is observed in the plot of tan delta versus temperature, obtained from the measurement of modulus of a specimen of the thermoplastic resin composition under conditions of a strain of 2.5%, a frequency of 1 Hz, and a heating rate of 5°C/min using a dynamic mechanical analyzer (model name: Q800, manufacturer: TA Instruments Inc.).

The thermoplastic resin composition according to one embodiment of the present invention may be prepared in pellet form by mixing the aforementioned components, followed by melt extrusion in a typical twin-screw extruder at a temperature of about 350°C to about 450°C, for example, about 380°C to about 420°C.

In some embodiments, the thermoplastic resin composition may have a weight loss (abrasion loss) of about 33 mg or less, for example, about 10 mg to about 30 mg, as measured on a specimen having a size of 100 mm×100 mm×3.2 mm after 1,000 cycles of operation under conditions of a load of 1 kgf and an abrasive wheel speed of 60 rpm using an abrasion resistance tester in accordance with ASTM D4060.

In some embodiments, the thermoplastic resin composition may have a surface resistivity of about 1×10⁶ Q/sq to about 1×10⁹ Q/sq, for example, about 2×10⁶ Q/sq to about 1×10⁹ Q/sq, as measured on a 1 mm thick specimen using a surface resistivity meter in accordance with ASTM D257.

In some embodiments, the thermoplastic resin composition may have a tensile strength at yield of about 93 MPa to about 100 MPa, for example, about 95 MPa to about 99 MPa, and a tensile modulus of about 3.3 GPa to about 4.0 GPa, for example, about 3.4 GPa to about 3.9 GPa, as measured on a 3.2 mm thick injection molded specimen at a crosshead speed of 50 mm/min in the machine direction (MD) of the specimen in accordance with ASTM D638.

In some embodiments, the thermoplastic resin composition may have a tensile strength at yield of about 93 MPa to about 100 MPa, for example, about 95 MPa to about 99 MPa, and a tensile modulus of about 3.3 GPa to about 4.0 GPa, for example, about 3.4 GPa to about 3.9 GPa, as measured on a 3.2 mm thick injection molded specimen at a crosshead speed of 50 mm/min in the transverse direction (TD) of the specimen in accordance with ASTM D638.

In some embodiments, the thermoplastic resin composition may have a difference of about 2 MPa or less between tensile strengths at yield of an injection molded specimen in the machine direction and the transverse direction thereof and a difference of about 0.2 GPa or less between tensile moduli of an injection molded specimen in the machine direction and the transverse direction thereof.

In some embodiments, the thermoplastic resin composition may have a flexural strength of about 140 MPa to about 150 MPa, for example, about 140 MPa to about 148 MPa, and a flexural modulus of about 3.2 GPa to about 4.0 GPa, for example, about 3.3 GPa to about 3.8 GPa, as measured on a 3.2 mm thick injection molded specimen at a crosshead speed of 2.8 mm/min in the machine direction (MD) of the specimen in accordance with ASTM D790.

In some embodiments, the thermoplastic resin composition may have a flexural strength of about 140 MPa to about 150 MPa, for example, about 140 MPa to about 148 MPa, and a flexural modulus of about 3.2 GPa to about 4.0 GPa, for example, about 3.3 GPa to about 3.8 GPa, as measured on a 3.2 mm thick injection molded specimen at a crosshead speed of 2.8 mm/min in the transverse direction (TD) of the specimen in accordance with ASTM D790.

In some embodiments, the thermoplastic resin composition may have a difference of about 2 MPa or less between flexural strengths of an injection molded specimen in the machine direction and the transverse direction thereof and a difference of about 0.2 GPa or less between flexural moduli of an injection molded specimen in the machine direction and the transverse direction thereof.

In some embodiments, the thermoplastic resin composition may exhibit no breakage in an impact strength test in accordance with ASTM D256, in which unnotched Izod impact strength is measured on a 3.2 mm thick injection molded specimen in the machine direction (MD) of the specimen.

In some embodiments, the thermoplastic resin composition may exhibit no breakage in an impact strength test in accordance with ASTM D256, in which unnotched Izod impact strength is measured on a 3.2 mm thick injection molded specimen in the transverse direction (TD) of the specimen.

A molded article according to the present invention is formed of the thermoplastic resin composition described above. The thermoplastic resin composition may be prepared in pellet form. The prepared pellets may be manufactured into various molded articles (products) by various molding methods, such as injection molding, extrusion, vacuum molding, casting, and the like. These molding methods are well known to those having ordinary knowledge in the art to which the present invention pertains. The molded product has good properties in terms of abrasion resistance, dissipation of electrostatic charge, rigidity, impact resistance, and balance therebetween without reduction in compatibility between the polyaryletherketone resin and the polyarylethersulfone resin and exhibits minimal variation in physical properties (rigidity, impact resistance, and the like) depending on the processing direction of a specimen (machine direction (MD) and transverse direction (TD)). Accordingly, the molded article is useful as materials for semiconductor wafer cleaning equipment, such as wafer chucks and chuck pins, semiconductor wafer transport equipment, such as wafer carriers and FOUPs, semiconductor securing equipment, such as retaining rings, and semiconductor wafer chip securing and post-processing equipment, such as trays and dies.

### [Mode for Invention]

Next, the present invention will be described in more detail with reference to some examples. However, it should be noted that these examples are provided for illustration only and are not to be construed in any way as limiting the present invention.

### EXAMPLE

Details of components used in Examples and Comparative Examples are as follows:
(A) Polyaryletherketone resin
   (A1) A polyetheretherketone resin (melt viscosity: 470 Pa·s, product name: 650G, manufacturer: Victrex Plc) was used.
   (A2) A polyetheretherketone resin (melt viscosity: 350 Pa·s, product name: 450G, manufacturer: Victrex Plc) was used.
   (A3) A polyetheretherketone resin (melt viscosity: 150 Pa·s, product name: KT880, manufacturer: Solvay SA) was used.
   (A4) A polyetheretherketone resin (melt viscosity: 90 Pa·s, product name: 90G, manufacturer: Victrex Plc) was used.
(B) Polyarylethersulfone resin
   (B1) A polyphenylsulfone resin (melt viscosity: 230 Pa·s, product name: Ultrason P2010, manufacturer: BASF SE) was used.
   (B2) A polyphenylsulfone resin (melt viscosity: 320 Pa·s, product name: Ultrason P3010, manufacturer: BASF SE) was used.
   (B3) A polyphenylsulfone resin (melt viscosity: 360 Pa·s, product name: Radel 5100, manufacturer: Solvay SA) was used.
(C) Carbon nanotubes
   Carbon nanotubes (product name: Lucan BT1003M, manufacturer: LG Chemical) were used.
(D) Graphite
   Graphite (product name: SC50, manufacturer: Samjung C&G) was used.

### Examples 1 to 11 and Comparative Examples 1 to 9

The aforementioned components were mixed in amounts as listed in Tables 1, 2, 3, and 4, followed by extrusion at 400°C, thereby preparing a thermoplastic resin composition in pellet form. Here, extrusion was performed using a twin-screw extruder (L/D: 40, Φ: 45 mm). The prepared pellets were dried at 100°C for 4 hours or more and then subjected to injection molding using a 6 oz. injection machine (molding temperature: 400°C, mold temperature: 150°C), thereby preparing a specimen. The prepared specimen was evaluated as to the following properties. Results are shown in Tables 1, 2, 3, and 4.

### Property evaluation

(1) Average domain size (unit: µm): After coating the specimen with platinum, the size of each domain (polyarylethersulfone resin) in a matrix (polyaryletherketone resin) was measured at magnifications of 10,000× and 50,000× using a data entry tool of a scanning electron microscope (SEM, model name: S-4800, manufacturer: Hitachi High-Tech.), followed by averaging the obtained values.
(2) Glass transition temperature (unit: °C): After modulus of the specimen was measured under conditions of a strain of 2.5%, a frequency of 1 Hz, and a heating rate of 5°C/min using a dynamic mechanical analyzer (model name: Q800, manufacturer: TA Instruments Inc.), a temperature corresponding to a peak in the plot of tan delta versus temperature was determined as the glass transition temperature of the specimen.
(3) Abrasion resistance: the weight loss (abrasion loss, unit: mg) of a specimen having a size of 100 mm×100 mm×3.2 mm was measured after 1,000 cycles of operation under conditions of a load of 1 kgf and an abrasive wheel speed of 60 rpm using an abrasion resistance tester (model name: 5135, manufacturer: Taber Industries, abrasive wheel: CS-17) in accordance with ASTM D4060.
(4) Surface resistivity (unit: Ω/sq): Surface resistivity was measured on a 1 mm thick specimen using a surface resistivity meter (model name: Model 152-1, manufacturer: TREK) in accordance with ASTM D257.
(5) Tensile strength at yield (unit: MPa) and tensile modulus (unit: GPa): Tensile strength at yield and tensile modulus were measured on a 3.2 mm thick injection molded specimen (size: 150 mm×150 mm×3.2 mm) at a crosshead speed of 50 mm/min in the machine direction (MD) of the specimen or at a crosshead speed of 50 mm/min in the transverse direction (TD) of the specimen in accordance with ASTM D638.
(6) Flexural strength (unit: MPa) and flexural modulus (unit: GPa): Flexural strength and flexural modulus were measured on a 3.2 mm thick injection molded specimen at a crosshead speed of 2.8 mm/min in the machine direction (MD) of the specimen or at a crosshead speed of 2.8 mm/min in the transverse direction (TD) of the specimen in accordance with ASTM D790.
(7) Unnotched Izod impact strength (unit: kgf·cm/cm): Unnotched Izod impact strength was measured on a 3.2 mm thick injection molded specimen in the machine direction (MD) of the specimen or in the transverse direction (TD) of the specimen in accordance with ASTM D256. (NB: Non-Break)

**[Table 1]**

| | | Example | | | | |
|---|---|---|---|---|---|---|
| | | 1 | 2 | 3 | 4 | 5 |
| (A) (wt%) | (A1) | 60 | 70 | 85 | 70 | 70 |
| | (A2) | - | - | - | - | - |
| | (A3) | - | - | - | - | - |
| | (A4) | - | - | - | - | - |
| (B) (wt%) | (B1) | 40 | 30 | 15 | 30 | 30 |
| | (B2) | - | - | - | - | - |
| | (B3) | - | - | - | - | - |
| Viscosity ratio (A) to (B) ((A)/(B)) | | 2.04 | 2.04 | 2.04 | 2.04 | 2.04 |
| (C) (parts by weight) | | 2.5 | 2.5 | 2.5 | 1.5 | 3 |
| (D) (parts by weight) | | 4.5 | 4.5 | 4.5 | 4.5 | 4.5 |
| Average domain size (µm) | | 0.3 | No visible domains | No visible domains | 0.2 | No visible domains |
| Glass transition temperature (°C) | | 155 | 164 | 159 | 155 | 158 |
| Abrasion resistance (mg) | | 24 | 22 | 20 | 18 | 26 |
| Surface resistivity (Ω/sq) | | 1.2×10⁸ | 5.5×10⁷ | 7.3×10⁶ | 6.1×10⁸ | 5.7×10⁶ |
| Tensile strength at yield in MD (MPa) | | 96.5 | 96.5 | 98.0 | 96.2 | 97.3 |
| Tensile strength at yield in TD (MPa) | | 95.3 | 96.0 | 97.5 | 95.7 | 96.8 |
| Tensile modulus in MD (GPa) | | 3.62 | 3.62 | 3.70 | 3.65 | 3.65 |
| Tensile modulus in TD (GPa) | | 3.57 | 3.57 | 3.66 | 3.57 | 3.61 |
| Flexural strength in MD (MPa) | | 143.1 | 143.5 | 145.5 | 143.2 | 144.0 |
| Flexural strength in TD (MPa) | | 142.1 | 142.9 | 145.1 | 142.2 | 143.5 |
| Flexural modulus in MD (GPa) | | 3.45 | 3.49 | 3.58 | 3.42 | 3.52 |
| Flexural modulus in TD (GPa) | | 3.38 | 3.41 | 3.51 | 3.36 | 3.47 |
| Unnotched Izod impact strength in MD (kgf·cm/cm) | | NB | NB | NB | NB | NB |
| Unnotched Izod impact strength in TD (kgf·cm/cm) | | NB | NB | NB | NB | NB |

| | | | | | | |
|---|---|---|---|---|---|---|
| * parts by weight: parts by weight relative to 100 parts by weight of the thermoplastic resin (A+B) | | | | | | |

**[Table 2]**

| | | Example | | | | | |
|---|---|---|---|---|---|---|---|
| | | 6 | 7 | 8 | 9 | 10 | 11 |
| (A) (wt%) | (A1) | 70 | 70 | - | 70 | - | 70 |
| | (A2) | - | - | 70 | - | 70 | - |
| | (A3) | - | - | - | - | - | - |
| | (A4) | - | - | - | - | - | - |
| (B) (wt%) | (B1) | 30 | 30 | 30 | - | - | - |
| | (B2) | - | - | - | 30 | 30 | - |
| | (B3) | - | - | - | - | - | 30 |
| Viscosity ratio of (A) to (B) ((A)/(B)) | | 2.04 | 2.04 | 1.52 | 1.47 | 1.09 | 1.31 |
| (C) (parts by weight) | | 2.5 | 2.5 | 2.5 | 2.5 | 2.5 | 2.5 |
| (D) (parts by weight) | | 3 | 6 | 4.5 | 4.5 | 4.5 | 4.5 |
| Average domain size (µm) | | No visible domains | No visible domains | No visible domains | No visible domains | 0.1 | No visible domains |
| Glass transition temperature (°C) | | 163 | 164 | 164 | 163 | 159 | 158 |
| Abrasion resistance (mg) | | 19 | 27 | 25 | 25 | 24 | 25 |
| Surface resistivity (Ω/sq) | | 3.1×10⁸ | 7.3×10⁶ | 3.6×10⁷ | 7.3×10⁷ | 1.1×10⁸ | 9.1×10⁷ |
| Tensile strength at yield in MD (MPa) | | 96.2 | 96.1 | 98.0 | 97.0 | 98.2 | 97.5 |
| Tensile strength at yield in TD (MPa) | | 95.7 | 95.5 | 97.5 | 96.4 | 97.0 | 96.5 |
| Tensile modulus in MD (GPa) | | 3.66 | 3.62 | 3.72 | 3.65 | 3.80 | 3.68 |
| Tensile modulus in TD (GPa) | | 3.55 | 3.55 | 3.65 | 3.58 | 3.66 | 3.61 |
| Flexural strength in MD (MPa) | | 142.5 | 142.5 | 144.1 | 146.0 | 141.9 | 145.2 |
| Flexural strength in TD (MPa) | | 141.6 | 141.8 | 143.7 | 145.2 | 141.1 | 144.3 |
| Flexural modulus in MD (GPa) | | 3.46 | 3.48 | 3.62 | 3.59 | 3.61 | 3.58 |
| Flexural modulus in TD (GPa) | | 3.4 | 3.41 | 3.57 | 3.54 | 3.47 | 3.48 |
| Unnotched Izod impact strength in MD (kgf·cm/cm) | | NB | NB | NB | NB | NB | NB |
| Unnotched Izod impact strength in TD (kgf·cm/cm) | | NB | NB | NB | NB | NB | NB |

| | | | | | | | |
|---|---|---|---|---|---|---|---|
| * parts by weight: parts by weight relative to 100 parts by weight of the thermoplastic resin (A+B) | | | | | | | |

**[Table 3]**

| | | Comparative Example | | | |
|---|---|---|---|---|---|
| | | 1 | 2 | 3 | 4 |
| (A) (wt%) | (A1) | 50 | 95 | 70 | 70 |
| | (A2) | - | - | - | - |
| | (A3) | - | - | - | - |
| | (A4) | - | - | - | - |
| (B) (wt%) | (B1) | 50 | 5 | 30 | 30 |
| | (B2) | - | - | - | - |
| | (B3) | - | - | - | - |
| Viscosity ratio of (A) to (B) ((A)/(B)) | | 2.04 | 2.04 | 2.04 | 2.04 |
| (C) (parts by weight) | | 2.5 | 2.5 | 0.5 | 4.5 |
| (D) (parts by weight) | | 4.5 | 4.5 | 4.5 | 4.5 |
| Average domain size (µm) | | Co-continuous | 0.8 | 1.4 | No visible domains |
| Glass transition temperature (°C) | | 152/198 | 155/200 | 152/203 | 160 |
| Abrasion resistance (mg) | | 23 | 24 | 20 | 30 |
| Surface resistivity (Ω/sq) | | 3.1×10⁹ | 2.3×10⁸ | 1.9×10¹¹ | 3.3×10³ |
| Tensile strength at yield in MD (MPa) | | 87.8 | 97.5 | 91.3 | 96.5 |
| Tensile strength at yield in TD (MPa) | | 82.1 | 89.3 | 86.1 | 95.8 |
| Tensile modulus in MD (GPa) | | 2.98 | 3.85 | 3.56 | 3.62 |
| Tensile modulus in TD (GPa) | | 2.65 | 3.51 | 3.20 | 3.57 |
| Flexural strength in MD (MPa) | | 136.3 | 147.5 | 141.3 | 145.1 |
| Flexural strength in TD (MPa) | | 130.1 | 140.1 | 133.6 | 144.2 |
| Flexural modulus in MD (GPa) | | 3.08 | 3.58 | 3.28 | 3.52 |
| Flexural modulus in TD (GPa) | | 2.80 | 3.19 | 2.95 | 3.50 |
| Unnotched Izod impact strength in MD (kgf·cm/cm) | | 82 | 125 | 95 | NB |
| Unnotched Izod impact strength in TD (kgf·cm/cm) | | 40 | 52 | 49 | NB |

| | | | | | |
|---|---|---|---|---|---|
| * parts by weight: parts by weight relative to 100 parts by weight of the thermoplastic resin (A+B) | | | | | |

**[Table 4]**

| | | Comparative Example | | | | |
|---|---|---|---|---|---|---|
| | | 5 | 6 | 7 | 8 | 9 |
| (A) (wt%) | (A1) | 70 | 70 | - | - | - |
| | (A2) | - | - | 70 | - | - |
| | (A3) | - | - | - | 70 | - |
| | (A4) | - | - | - | - | 70 |
| (B) (wt%) | (B1) | 30 | 30 | - | - | 30 |
| | (B2) | - | - | - | 30 | - |
| | (B3) | - | - | 30 | - | - |
| Viscosity ratio (A) to (B) ((A)/(B)) | | 2.04 | 2.04 | 0.97 | 0.47 | 0.39 |
| (C) (parts by weight) | | 2.5 | 2.5 | 2.5 | 2.5 | 2.5 |
| (D) (parts by weight) | | 1 | 8 | 4.5 | 4.5 | 4.5 |
| Average domain size (µm) | | No visible domains | No visible domains | 1.3 | 1.6 | 2.0 |
| Glass transition temperature (°C) | | 162 | 164 | 162/195 | 163/197 | 163/198 |
| Abrasion resistance (mg) | | 15 | 35 | 26 | 27 | 27 |
| Surface resistivity (Ω/sq) | | 4.3×10¹⁰ | 6.5×10⁴ | 1.8×10⁹ | 2.9×10⁹ | 4.4×10⁹ |
| Tensile strength at yield in MD (MPa) | | 96.3 | 96.0 | 93.0 | 92.5 | 91.0 |
| Tensile strength at yield in TD (MPa) | | 95.7 | 95.2 | 88.4 | 85.8 | 84.3 |
| Tensile modulus in MD (GPa) | | 3.60 | 3.65 | 3.63 | 3.51 | 3.52 |
| Tensile modulus in TD (GPa) | | 3.54 | 3.55 | 3.24 | 3.14 | 3.18 |
| Flexural strength in MD (MPa) | | 143.2 | 143.0 | 143.8 | 143.8 | 141.9 |
| Flexural strength in TD (MPa) | | 142.5 | 142.5 | 138.2 | 137.5 | 137.0 |
| Flexural modulus in MD (GPa) | | 3.48 | 3.52 | 3.38 | 3.35 | 3.31 |
| Flexural modulus in TD (GPa) | | 3.41 | 3.43 | 3.14 | 3.15 | 3.06 |
| Unnotched Izod impact strength in MD (kgf·cm/cm) | | NB | NB | NB | 160 | 148 |
| Unnotched Izod impact strength in TD (kgf·cm/cm) | | NB | NB | 125 | 115 | 105 |

| | | | | | | |
|---|---|---|---|---|---|---|
| * parts by weight: parts by weight relative to 100 parts by weight of the thermoplastic resin (A+B) | | | | | | |

As can be from the above results, the thermoplastic resin compositions according to the present invention exhibited good compatibility between the polyaryletherketone resin (matrix) and the polyarylethersulfone resin (domain), as evidenced by an average domain size of 0.5 µm or less. In addition, the thermoplastic resin compositions according to the present invention had good properties in terms of abrasion resistance, dissipation of electrostatic charge (surface resistivity), rigidity (tensile strength, tensile modulus, flexural strength, and flexural modulus) and impact resistance (unnotched Izod impact strength) and exhibited uniform properties in different processing directions of a specimen (machine direction (MD) and transverse direction (TD)).

Conversely, the thermoplastic resin composition of Comparative Example 1, in which the content of the polyaryletherketone resin was less than the range according to the present invention and the content of the polyarylethersulfone resin exceeded the range according to the present invention, had poor properties in terms of compatibility between the polyaryletherketone resin and the polyarylethersulfone resin, dissipation of electrostatic charge (ESD exceeding the upper limit according to the present invention), rigidity, and impact resistance and exhibited significant variation in properties (rigidity, impact resistance, and the like) depending on the processing direction of a specimen (MD and TD); the thermoplastic resin composition of Comparative Example 2, in which the content of the polyaryletherketone resin exceeded the range according to the present invention and the content of the polyarylethersulfone resin was less than the range according to the present invention, had poor properties in terms of compatibility between the polyaryletherketone resin and the polyarylethersulfone resin, rigidity, and impact resistance and exhibited significant variation in properties (rigidity, impact resistance, and the like) depending on the processing direction of a specimen (MD and TD); the thermoplastic resin composition of Comparative Example 3, in which the content of the carbon nanotubes was less than the range according to the present invention, had poor properties in terms of compatibility between the polyaryletherketone resin and the polyarylethersulfone resin, dissipation of electrostatic charge (ESD exceeding the upper limit according to the present invention), rigidity, and impact resistance and exhibited significant variation in properties (rigidity, impact resistance, and the like) depending on the processing direction of a specimen (MD and TD); and the thermoplastic resin composition of Comparative Example 4, in which the content of the carbon nanotubes exceeded the range according to the present invention, had poor properties in terms of dissipation of electrostatic charge (ESD less than the lower limit according to the present invention). Here, low surface resistivity increases the risk of damage to electronic components due to external static electricity or external electricity. In addition, the thermoplastic resin composition of Comparative Example 5, in which the content of the graphite was less than the range according to the present invention, had poor properties in terms of dissipation of electrostatic charge (ESD exceeding the upper limit according to the present invention); and the thermoplastic resin composition of Comparative Example 6, in which the content of the graphite exceeded the range according to the present invention, had poor properties in terms of abrasion resistance and dissipation of electrostatic charge (ESD less than the lower limit according to the present invention). In addition, the thermoplastic resin compositions of Comparative Examples 7 to 9, in which the average size of domains (polyarylethersulfone resin) in a matrix (polyaryletherketone resin) exceeded 0.5 µm, had poor properties in terms of compatibility between the polyaryletherketone resin and the polyarylethersulfone resin, dissipation of electrostatic charge (ESD exceeding the upper limit according to the present invention), rigidity, and impact resistance and exhibited significant variation in properties (rigidity, impact resistance, and the like) depending on the processing direction of a specimen (MD and TD).

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A thermoplastic resin composition comprising:
about 100 parts by weight of a thermoplastic resin comprising about 60 wt% to about 90 wt% of a polyaryletherketone resin and about 10 wt% to about 40 wt% of a polyarylethersulfone resin;
about 1 part by weight to about 4 parts by weight of carbon nanotubes; and
about 2 parts by weight to about 7 parts by weight of graphite,
wherein domains (the polyarylethersulfone resin) in a matrix (the polyaryletherketone resin) have an average size of about 0.5 µm or less, as measured by scanning electron microscopy (SEM) at magnifications of 10,000× and 50,000×.

2. The thermoplastic resin composition according to claim 1, wherein the polyaryletherketone resin comprises a repeat unit represented by Formula 1.

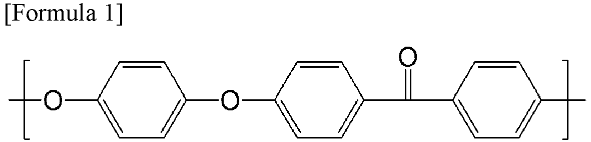

3. The thermoplastic resin composition according to claim 1 or 2, wherein the polyaryletherketone resin has a melt viscosity of about 300 Pa·s to about 500 Pa·s, as measured at a temperature of 400°C and a shear rate of 1,000 sec⁻¹ using a capillary viscometer in accordance with ASTM D3835.

4. The thermoplastic resin composition according to any one of claims 1 to 3, wherein the polyarylethersulfone resin comprises a repeat unit represented by Formula 2.

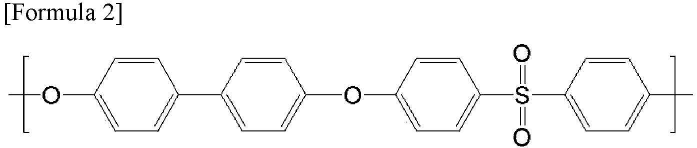

5. The thermoplastic resin composition according to any one of claims 1 to 4, wherein the polyarylethersulfone resin has a melt viscosity of about 200 Pa·s to about 400 Pa·s, as measured at a temperature of 400°C and a shear rate of 1,000 sec⁻¹ using a capillary viscometer in accordance with ASTM D3835.

6. The thermoplastic resin composition according to any one of claims 1 to 5, wherein a melt viscosity ratio of the polyaryletherketone resin to the polyarylethersulfone resin ranges from about 1:1 to about 4:1.

7. The thermoplastic resin composition according to any one of claims 1 to 6, wherein the carbon nanotubes have an average diameter of about 3 nm to about 15 nm and an average length of about 10 µm to about 25 µm.

8. The thermoplastic resin composition according to any one of claims 1 to 7, wherein the graphite has an average particle size of about 10 µm to about 100 µm and is flake graphite or expanded flake graphite.

9. The thermoplastic resin composition according to any one of claims 1 to 8, wherein the thermoplastic resin composition has a glass transition temperature of about 150°C to about 170°C and exhibits a single glass transition temperature.

10. The thermoplastic resin composition according to any one of claims 1 to 9, wherein the thermoplastic resin composition has a weight loss (abrasion loss) of about 33 mg or less, as measured on a specimen having a size of 100 mm×100 mm×3.2 mm after 1,000 cycles of operation under conditions of a load of 1 kgf and an abrasive wheel speed of 60 rpm using an abrasion resistance tester in accordance with ASTM D4060.

11. The thermoplastic resin composition according to any one of claims 1 to 10, wherein the thermoplastic resin composition has a surface resistivity of about 1×10⁶ Ω/sq to about 1×10⁹ Q/sq, as measured on a 1 mm thick specimen using a surface resistivity meter in accordance with ASTM D257.

12. The thermoplastic resin composition according to any one of claims 1 to 11, wherein the thermoplastic resin composition has a tensile strength at yield of about 93 MPa to about 100 MPa and a tensile modulus of about 3.3 GPa to about 4.0 GPa, as measured on a 3.2 mm thick injection molded specimen at a crosshead speed of 50 mm/min in the machine direction (MD) of the specimen or at a crosshead speed of 50 mm/min in the transverse direction (TD) of the specimen in accordance with ASTM D638, a difference between tensile strengths at yield of the injection molded specimen in the machine direction and the transverse direction thereof is less than or equal to about 2 MPa, and a difference between tensile moduli of the injection molded specimen in the machine direction and the transverse direction thereof is less than or equal to about 0.2 GPa.

13. The thermoplastic resin composition according to any one of claims 1 to 12, wherein the thermoplastic resin composition has a flexural strength of about 140 MPa to about 150 MPa and a flexural modulus of about 3.2 GPa to about 4.0 GPa, as measured on a 3.2 mm thick injection molded specimen at a crosshead speed of 2.8 mm/min in the machine direction (MD) of the specimen or at a crosshead speed of 2.8 mm/min in the transverse direction (TD) of the specimen in accordance with ASTM D790, a difference between flexural strengths of the injection molded specimen in the machine direction and the transverse direction thereof is less than or equal to about 2 MPa, and a difference between flexural moduli of the injection molded specimen in the machine direction and the transverse direction thereof is less than or equal to about 0.2 GPa.

14. The thermoplastic resin composition according to any one of claims 1 to 13, wherein the thermoplastic resin composition exhibits no breakage in an impact strength test in accordance with ASTM D256, in which unnotched Izod impact strength is measured on a 3.2 mm thick injection molded specimen in the machine direction (MD) or the transverse direction (TD) of the specimen.

15. A molded article formed of the thermoplastic resin composition according to any one of claims 1 to 14.
